# EUROPÄISCHE PATENTSCHRIFT

(11) **EP 1 241 613 B1**
(45) Veröffentlichungstag und Bekanntmachung des Hinweises auf die Patenterteilung: **08.12.2004**
(21) Anmeldenummer: 02004570.4
(22) Anmeldetag: 27.02.2002
(51) Int. Cl.: G06K 9/03, G06K 9/20

(54) **Verfahren zum Ermitteln von Fehlerarten fehlerbehafteter Leseergebnisse**
Method for determining type of error for reading results containing errors
Procédé pour déterminer le type d'erreur pour des résultats de lecture avec des erreurs

(30) Priorität: 14.03.2001 DE 10112186
(43) Veröffentlichungstag der Anmeldung: 18.09.2002
(73) Patentinhaber: Siemens Aktiengesellschaft, 80333 München (DE)
(72) Erfinder: Jakesch, Wolfgang, 78479 Reichenau (DE)
(74) Vertreter: Berg, Peter, Dipl.-Ing.

(56) Entgegenhaltungen:
- COHEN E: "COMPUTATIONAL THEORY FOR INTERPRETING HANDWRITTEN TEXT IN CONSTRAINED DOMAINS" ARTIFICIAL INTELLIGENCE, ELSEVIER SCIENCE PUBLISHER B.V., AMSTERDAM, NL, Bd. 67, Nr. 1, 1. Juli 1994 (1994-07-01), Seiten 1-31, XP002054917 ISSN: 0004-3702
- SRIHARI S N ET AL: "DOCUMENT IMAGE-PROCESSING SYSTEM FOR NAME AND ADDRESS RECOGNITION" INTERNATIONAL JOURNAL OF IMAGING SYSTEMS AND TECHNOLOGY, WILEY AND SONS, NEW YORK, US, Bd. 7, Nr. 4, 21. Dezember 1996 (1996-12-21), Seiten 379-391, XP000637459 ISSN: 0899-9457
- SRIHARI S N ET AL: "INFORMATION THEORETIC ANALYSIS OF POSTAL ADDRESS FIELDS FOR AUTOMATIC ADDRESS INTERPRETATION" INTERNATIONAL SYMPOSIUM ON DOCUMENT ANALYSIS AND SPEECH RECOGNITION, XX, XX, Dezember 1999 (1999-12), Seiten 1-19, XP001162837

## Beschreibung

Die Erfindung betrifft ein Verfahren zum Ermitteln von Fehlerarten fehlerhafter Leseergebnisse eines OCR-Lesers für einheitlich inhaltsstrukturierte, in abgrenzbare Abschnitte unterteilte Texteinheiten, wobei von jeder zu lesenden Texteinheit Referenzdaten erzeugt werden. Die Texteinheiten bestehen aus alphanumerischen Zeichen, dies können z.B. Formulareinträge oder Sendungsadressen sein.

Das automatische Adresslesen von Sendungen ist eine weltweit verbreitete Technologie beim Sortieren und Verteilen der Sendungen. Die Adressen auf den Sendungen beinhalten dabei einen Postkode, Ortsangaben, Straßennamen, Hausnummern, ggf. Appartementnummern und Namen, sowie evtl. weitere kennzeichnenden Angaben. Der Postkode besteht entweder aus Zahlen (ZIP-Code in US, Postleitzahl in DE) und beschreibt den Ort oder aus einem Gemisch von Zahlen und Buchstaben und beschreibt die Adresse herunter bis zur Straße.

Beim automatischen Lesevorgang in einem OCR-Leser werden die Zeichen und dann die einzelnen Elemente der Adresse gelesen. Danach erfolgt ein Abgleich mit den Eintragungen eines Adresswörterbuches und mit Hilfe des Adresswörterbuches die Ermittlung eines die Adresse bis hinunter zu Hausnummern einer Straße beschreibenden Adresskodes (Postkode und weitere in der Adressdatenbank eingetragene Kodezeichen). Beschreibt der Postkode die Adresse hinunter bis zur Straße, erfolgt beim Lesen in der OCR-Einheit ein Abgleich der gelesenen Postkodedaten und der gelesenen Städte- und Straßennamen sowie Hausnummer auf Gültigkeit.

Diese Technologie ist jedoch nicht perfekt. Die beim automatischen Lesen ermittelte Verteilinformation stimmt in manchen Fällen nicht mit der Verteilinformation auf der Postsendung überein. Um die Lesequalität eines OCR-Lesers zu überprüfen und um Aussagen über die Fehlerarten und -häufigkeiten zu erhalten, wurden von Stichproben die Adressen als Referenz manuell eingegeben und daraus mittels eines Adresswörterbuches der Adresskode ermittelt. Dann wurde zu jeder Adresse der Adresskode aus der manuell eingegebenen Adresse mit dem sich aus dem automatischen Leseprozess ergebenden Adresskode automatisch verglichen. Bei diesem Vergleich des aus der manuell eingegebenen Adresse ermittelten Adresskodes mit dem sich aus dem automatischen Leseprozess ergebenden Adresskode konnten zwar Lesefehler identifiziert werden, ein Rückschluss auf deren Ursachen war jedoch nicht möglich.

Deshalb wurden die einzelnen Verarbeitungsschritte des OCR-Lesers bisher manuell und interaktiv daraufhin untersucht, ob der Lesefehler in diesem jeweiligen Verarbeitungsschritt verursacht wurde oder nicht. Dieses Vorgehen ist sehr zeitintensiv und fehleranfällig, es kann daher nur für wenige Lesefehler durchgeführt werden. Die Analyse bindet die Experten des gerade untersuchten Moduls und sie kann nicht unabhängig vom Leser betrieben werden.

Der Artikel "Computational Theory for Interpreting Handwritten Text in Constrained Domains" von E. Cohen, Artificial Intelligence, Bd. 67, Nr. 1, Elsevier Science Publishers, 1994, offenbart in Beispielen die Ermittlung eines postalischen Adresscodes (delivery point codes) für eine handschriftliche Briefadresse. Dazu werden die Adresskomponenten ZIP code, Straße, Land, Stadt etc. und deren Erkennungssicherheit ermittelt und gegeneinander abgeglichen. Zum Beispiel kann ein nur schlecht erkannter ZIP code angesichts eines gut erkannten Länderkürzels korrigiert werden, wenn aus der einschlägigen Datenbank (ZIP codes per Land) eine solche Korrektur nahegelegt ist.

Der im Anspruch 1 dargelegten Erfindung liegt daher die Aufgabe zugrunde, ein gattungsgemäßes Verfahren zu schaffen, mit dem gegenüber dem Stand der Technik eine schnellere und aufwandsärmere Fehleranalyse zur Ermittlung der Fehlerarten erfolgt.

Die Verwendung eines strukturierten, recherchierbaren Wörterbuches für die Texteinheiten mit abgegrenzten Abschnitten, die automatische Umwandlung der wahren Referenzdaten mit Hilfe des Wörterbuches in eine Texteinheit mit den dazugehörenden, abgegrenzten Abschnitten, das automatische Suchen anhand der Leseergebnisdaten im Wörterbuch nach einer Texteinheit mit den Abschnitten, d.h. die Rekonstruktion der strukturierten Texteinheit, der Vergleich der korrespondierenden Abschnitte und die Ermittlung der Fehlerklassen ermöglicht eine sehr schnelle automatische Fehleranalyse ohne aufwendige Einbeziehung von Spezialisten.

Vorteilhafte Ausgestaltungen der Erfindung sind in den Unteransprüchen dargestellt.

Vorteilhaft ist es, die Fehlerarten von einer Lesestichprobe zu ermitteln.

Soll die Fehleranalyse zur anschließenden Veränderung der Parameter des OCR-Lesers verwendet werden, um die Leserate zu verbessern, so ist es vorteilhaft, die ermittelten Fehlerklassen statistisch auszuwerten. Damit sind erst aussagefähige Analyseergebnisse für eine Leserveränderung vorhanden.

Vorteilhaft ist es auch, die Erfindung zum Lesen von Adressen, insbesondere Sendungsadressen einzusetzen. Diese Sendungsadressen werden vorteilhaft durch Adresskodes gekennzeichnet, die auch im Adresswörterbuch enthalten sind.

Zum Ermitteln der fehlerhaften Leseergebnisse ist es vorteilsen, insbesondere Sendungsadressen sinzusetzen. Diese Senhaft, die aus der manuellen Eingabe und aus dem Leseprozess erzeugten Adresskodes miteinander zu vergleichen.

Vorteilhaft ist es auch, den im Leseprozess erzeugten Adresskode zum Suchen der passenden Adresseintragung im Adresswörterbuch und damit zum Ermitteln der Adressteile zu verwenden.

Die wahren Referenzdaten werden vorteilhaft durch manuelle Eingabe erzeugt.

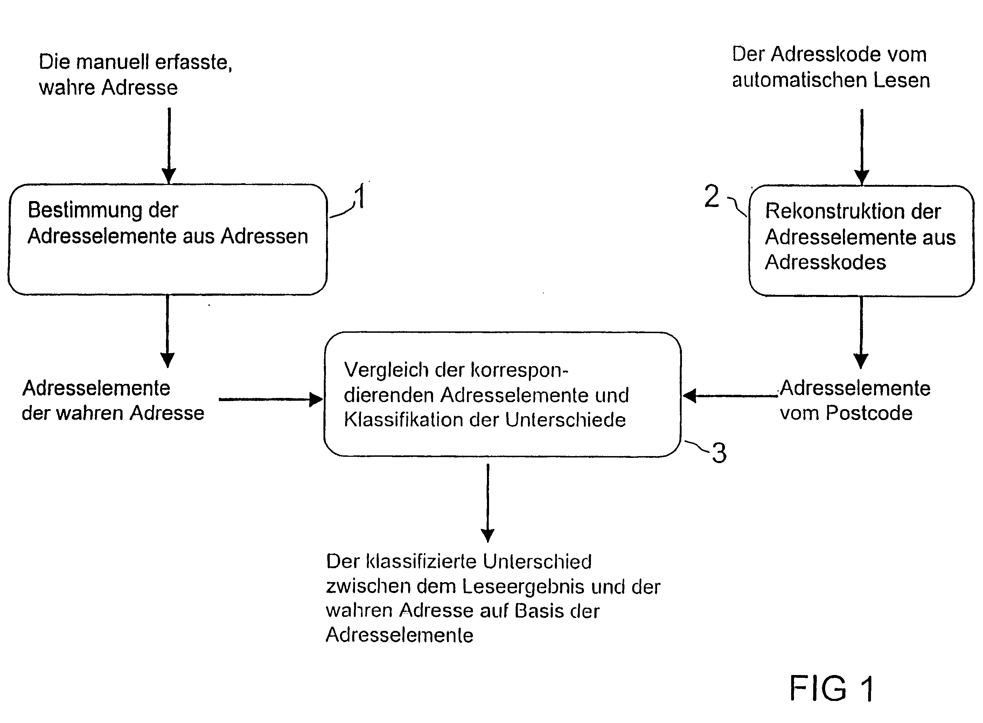

Anschließend wird die Erfindung in einem Ausführungsbeispiel anhand der Zeichnung näher erläutert.
Dabei zeigen
- FIG 1: ein Flussbild über den Verfahrensablauf für zu lesende Adressen,

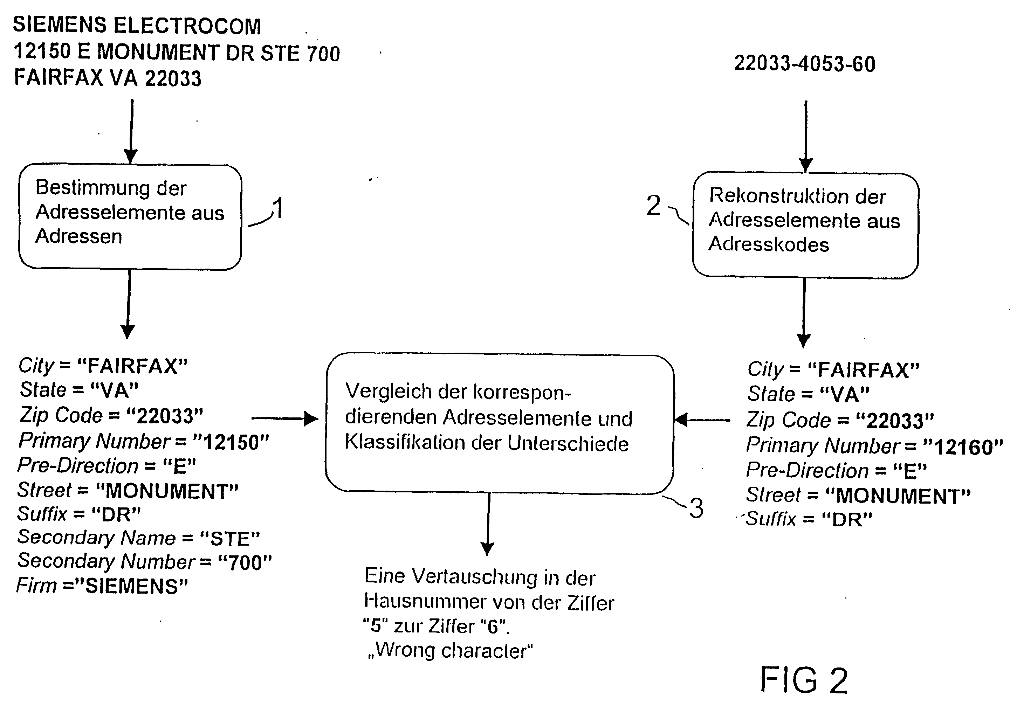

- FIG 2: ein Flussbild für eine konkrete US-Adresse.

In dem Ausführungsbeispiel wird der Verfahrensablauf beim Lesen einer US-Adresse beschrieben.

Die Leseaufgabe besteht darin, folgende Adressen als Texteinheit zu lesen:
**SIEMENS ELECTROCOM**
**12150 E MONUMENT DR STE 700**
**FAIRFAX VA 22033**

Der OCR-Leser ermittelt dazu folgenden Adresskode:
**22033-4053-60**

Nachdem die wahre Adresse manuell eingegeben wurde, erfolgt mit Hilfe eines Adresswörterbuches die Bestimmung der gültigen Adresskodes, um festzustellen, ob diese Adresse fehlerhaft gelesen wurde. Stimmt nämlich der vom OCR-Leser ermittelte Adresskode nicht mit einem der gültigen Adresskodes überein, so liegt ein Lesefehler vor.

Die Adressen haben häufig mehrere gültige Adresskodes, da sie in unterschiedlichen Detaillierungsstufen (z.B. mit oder ohne Hausnummer, mit oder ohne Straßenangabe) verschiedene, aber gültige Adresskodes besitzen.

Für die angegebene Adresse lauten die auf der Basis der manuellen Eingabe ermittelten Adresskodes:
**22033-4064-75, 22033-4064, 22033-4053-50, 22033-4053, 22033 und 220330**.

Damit ist ein Fehler identifiziert, doch die Ursache ist noch unbekannt.

Nachdem beim Durchsuchen des Adresswörterbuches der entsprechende Eintrag mit dem Adresskode gefunden wurde, erfolgt die Bestimmung der einzelnen Adresselemente (Textabschnitte) entsprechend der Eintragungen 1. Dabei haben sich folgende Adresselemente ergeben:
*City*=**"FAIRFAX"**, *State*=**"VA"**, *Zip Code*=**"22033"**
*Primary*=**"12150"**, *Pre-Direction*=**"E"**, *Street*=**"MONUMENT"**
*Suffix*=**"DR",** *Secondary*=**"STE 700"**, *Firm*=**"SIEMENS ELECTROCOM"**

Mit dem vom OCR-Leser ermittelten Adresskode wird im Adresswörterbuch ebenfalls ein entsprechender Eintrag mit Adresselementen gesucht. Damit erfolgt also eine Rekonstruktion der Adresselemente aus dem Adresskode des OCR-Lesers 2. Unter dem Adresskode 22033-4053-60 sind folgende Adresselemente eingetragen:
*City*=**"FAIRFAX"**, *State=* **"VA"**, *Zip Code=*"**22033**"
*Primary=*"**12160"**, *Pre-Direction*=**"E"**, *Street*=**"MONUMENT"**
*Suffix*=**"DR**"

Anschließend werden diese Adresselemente paarweise verglichen 3:
Zunächst wird festgestellt, welche Adresselemente identisch sind und welche nicht. Die Adresselemente *Primary*, *Secondary* und *Firm* sind nicht identisch. Beim Adresselement *Primary* liegt der Unterschied in einem Zeichen. Der Leser hat eine "5" durch eine "6" vertauscht. Die Adresselemente *Secondary* und *Firm* sind seitens des Lesers unbelegt. Der Fehler ist daher eine Vertauschung in der Hausnummer von der Ziffer "5" zur Ziffer "6".

In dieser US-Anwendung werden folgende Fehlerklassen verwendet:
■ Read5 Error: Das 5-Digit Result ist falsch.
■ Read9 Error: Das 9-Digit Result ist falsch.
■ Unique Error: Es handelt sich um einen Unique ZIP Code.
■ Wrong State: Das 11-Digit Result gehört zu einem anderen State.
■ Wrong City: Das 11-Digit Result gehört zu einer anderen City.
■ Missing Street: In den Solldaten fehlt der Straßenname.
■ Box versus Street: Es handelt sich um kombinierte PO BOX /STREET Adresse.
■ Wrong Street Name: Das 11-digit Result gehört zu einer anderen Strasse.
■ Wrong Direction: Das 11-Digit Result hat eine andere Direction.
■ Wrong Suffix: Das 11-Digit Result hat eine andere Suffix als die Solldaten.
■ Missing Primary: In den Solldaten fehlt die Hausnummer.
■ Primary Length: Die Hausnummer vom 11-Digit Result hat eine andere Länge.
■ Wrong Character: Die Hausnummer vom 11-Digit Result hat 1 falsches Zeichen.
■ Wrong Primary: Das 11-Digit Result gehört zu einer anderen Hausnummer.
■ Missing Secondary: In den Solldaten fehlt die Secondary.
■ Wrong Secondary: Das 11-Digit Result gehört zu einem anderen Secondary.
■ Missing Firm: In den Solldaten fehlt die Firma.
■ Wrong Firm: Das 11-Digit Result gehört zu einer anderen Firma.
■ Reconstruction: Die Adresselemente konnten nicht rekonstruiert werden.
■ Unknown Error: Die Adresselemente sind paarweise identisch.

Das bedeutet, dass die Fehlerklasse "Wrong Character" und damit ein Fehler in der Einzelzeichenerkennung vorliegt.

## Patentansprüche

1. Verfahren zum Ermitteln von Fehlerarten von fehlerhaften Leseergebnissen eines OCR-Lesers für einheitlich inhaltsstrukturierte, in abgrenzbare Abschnitte unterteilte Texteinheiten, unter Verwendung von wahren Referenzdaten, **dadurch gekennzeichnet, dass** mit den Referenzdaten zu der jeweiligen fehlerhaft gelesenen Texteinheit in einem Wörterbuch für die Texteinheiten, das zu jedem recherchierbaren Eintrag eine Texteinheit, unterteilt in einzelne, abgegrenzte Abschnitte, enthält, die jeweilige Texteinheit mit den dazugehörenden Abschnitten automatisch ermittelt wird, dass mit den Leseergebnisdaten in Wörterbuch eine Texteinheit mit dazugehörenden Abschnitten gesucht wird, die gefundenen Abschnitte mit den jeweiligen korrespondierenden Referenzabschnitten paarweise verglichen werden und dass das jeweilige fehlerhafte Leseergebnis auf der Basis der beim paarweisen Vergleich ermittelten Abweichungen in festgelegte Fehlerklassen eingeordnet wird.

2. Verfahren nach Anspruch 1, **dadurch gekennzeichnet, dass** die Fehlerarten von einer Lesestichprobe ermittelt werden.

3. Verfahren nach Anspruch 1, **dadurch gekennzeichnet, dass** die ermittelten Fehlerklassen statistisch ausgewertet werden.

4. Verfahren nach Anspruch 1, **dadurch gekennzeichnet, dass** die Texteinheiten Adressen darstellen.

5. Verfahren nach Anspruch 4, **dadurch gekennzeichnet, dass** jeder Eintrag im Adresswörterbuch einen Adresskode enthält.

6. Verfahren nach Anspruch 5, **dadurch gekennzeichnet, dass** beim automatischen Lesen ein Adresskode erzeugt wird, der mit einem aus den manuellen Eingabedaten erzeugten Adresskode verglichen wird, wobei bei Nichtübereinstimmung ein Lesefehler diagnostiziert wird.

7. Verfahren nach Anspruch 5, **dadurch gekennzeichnet, dass** mit dem Adresskode als Leseergebnisdaten im Adresswörterbuch eine Adresse mit den verschiedenen Adresselementen als Abschnitte der Texteinheit zum Vergleich mit den Adresselementen aus der manuellen Eingabe gesucht wird.

8. Verfahren nach Anspruch 1, **dadurch gekennzeichnet, dass** die wahren Referenzdaten für jede zu lesende Texteinheit durch manuelle Eingabe erzeugt werden.

## Claims

1. Method for ascertaining error types for incorrect reading results from an OCR reader for text units which have a standard content structure and are subdivided into distinguishable sections, using true reference data, **characterized in that** the reference data for the respective incorrectly read text unit are used for automatically ascertaining the respective text unit with the associated sections in a dictionary for the text units which contains a text unit, subdivided into individual, distinct sections, for each searchable entry, **in that** the reading result data are used to search the dictionary for a text unit with associated sections, the sections found with the respective corresponding reference sections are compared pair by pair, and **in that** the respective incorrect reading result is classified into stipulated error classes on the basis of the discrepancies ascertained in the pair by pair comparison.

2. Method according to Claim 1, **characterized in that** the error types are ascertained from a random reading sample.

3. Method according to Claim 1, **characterized in that** the error classes ascertained are evaluated on a statistical basis.

4. Method according to Claim 1, **characterized in that** the text units are addresses.

5. Method according to Claim 4, **characterized in that** each entry in the address dictionary contains an address code.

6. Method according to Claim 5, **characterized in that** the automatic reading involves production of an address code which is compared with an address code produced from the manual input data, with a reading error being diagnosed if there is no match.

7. Method according to Claim 5, **characterized in that** the address code as reading result data is used to search the address dictionary for an address with the various address elements as sections of the text unit for comparison with the address elements from the manual input.

8. Method according to Claim 1, **characterized in that** the true reference data for each text unit which is to be read are produced by manual input.

## Revendications

1. Procédé pour déterminer des types d'erreurs de résultats de lecture erronés d'un lecteur OCR pour des unités textuelles dont le contenu est structuré uniformément et qui est divisé en tronçons délimitables en utilisant de vraies données de référence,
**caractérisé par le fait que**, avec les données de référence pour l'unité textuelle respective mal lue, on détermine automatiquement dans un dictionnaire pour les unités textuelles, qui contient pour chaque enregistrement pouvant être recherché une unité textuelle divisée en différents tronçons délimités, l'unité textuelle respective ayant les tronçons correspondants, avec les données de résultat de lecture, on cherche dans le dictionnaire une unité textuelle ayant des tronçons correspondants et on compare deux par deux les tronçons trouvés et les tronçons de référence respectifs correspondants, et on range dans des classes d'erreurs spécifiées le résultat de lecture erroné respectif en fonction des différences déterminées lors de la comparaison deux par deux.

2. Procédé selon la revendication 1, **caractérisé par le fait qu'**on détermine les types d'erreurs d'un échantillon de lecture.

3. Procédé selon la revendication 1, **caractérisé par le fait qu'**on exploite statistiquement les classes d'erreurs déterminées.

4. Procédé selon la revendication 1, **caractérisé par le fait que** les unités textuelles représentent des adresses.

5. Procédé selon la revendication 4, **caractérisé par le fait que** chaque enregistrement dans le dictionnaire d'adresses contient un code d'adresse.

6. Procédé selon la revendication 5, **caractérisé par le fait que**, lors de la lecture automatique, on produit un code d'adresse qui est comparé à un code d'adresse produit à partir des données d'entrée manuelles, une erreur de lecture étant diagnostiquée en cas de non-coïncidence.

7. Procédé selon la revendication 5, **caractérisé par le fait que**, avec le code d'adresse comme données de résultat de lecture, on cherche dans le dictionnaire d'adresses une adresse ayant les différents éléments d'adresses en tant que tronçons de l'unité textuelle pour la comparaison avec les éléments d'adresse issus de l'entrée manuelle.

8. Procédé selon la revendication 1, **caractérisé par le fait qu'**on produit au moyen d'une entrée manuelle les vraies données de référence pour chaque unité textuelle à lire.
